# EUROPEAN PATENT APPLICATION

(11) **EP 1 780 438 A1**
(43) Date of publication of application: **02.05.2007**
(21) Application number: 06022296.5
(22) Date of filing: 25.10.2006
(51) Int. Cl.: F16F 9/36, F16J 15/32

(54) **Seal for the oil contained in a hydraulic shock absorber**

(30) Priority: 25.10.2005 IT TO20050151 U
(71) Applicant: IDIS S.A., 2449 Luxembourg (LU)
(72) Inventor: Di Sora, Egidio, 03100 Frosinone (FR)
(74) Representative: Lotti, Giorgio

(57) **Abstract**

Described herein is a seal for the oil contained in the cylinder of a shock absorber for motor vehicles, made up, among other things, of a stem with control valve slidably inserted in the cylinder; said seal is disk-shaped, is mounted slidably on the stem (4), and is made up of at least one ring (5,6) made of plastic material combined with rubber via co-moulding.

## Description

The present invention relates to a seal for controlling the oil contained in a cylinder, in particular the cylinder of a shock absorber, for motor vehicles.

As is known, at present, in order to guarantee oil seal in the cylinders, rubber gaskets are generally used having particular shapes dictated by specific requirements, whilst for applications such as, for example, on the stem of a hydraulic shock absorber for motor vehicles, rubber gaskets with cores made of steel are generally used, which enable a longer duration and above all a greater reliability against failure. It is known that a sudden failure of a shock absorber can render the vehicle unstable from one moment to the next and create conditions that can cause an accident or even cause the vehicle to go off the road.

The main problem of the above seals or gaskets is represented by the fact that their process of manufacture is long and very delicate and hence in ultimate analysis costly.

The purpose of the present invention is to provide a seal for the oil contained in the cylinder of a shock absorber for motor vehicles that, albeit maintaining the characteristics of functionality of the known and currently used types of gasket, will enable a saving in terms of production costs and investment value for its manufacture.

The above purpose is achieved by the present invention, the subject of which is a disk-shaped seal for the oil contained in the cylinder of a shock absorber for motor vehicles that has the characteristics specified in Claim 1.

Further characteristics and advantages of the invention will emerge clearly from the ensuing description, with reference to the figures of the attached plate of drawings, which is provided by way of non-limiting example and in which:
- Figure 1 is a cross-sectional view of a shock absorber, inserted in which is the seal according to the invention;
- Figure 2 is an enlarged view of a first component of the seal according to the invention;
- Figure 3 is an enlarged view of a second component of the seal according to the invention;
- Figure 4 is a perspective view of a first face of the seal according to the invention; and
- Figure 5 is a perspective view of the second face of the seal according to the invention opposite to the first.

With reference to the figures, number 1 designates as a whole a cylindrical shock absorber, in particular a shock absorber for motor vehicles, made up, among other things, of a cylinder 2, sliding in which is a stem 3, the stroke of which is controlled by control valves 4.

The arrow A indicates the position in which the oil seal according to the invention is mounted within the shock absorber around the stem 3.

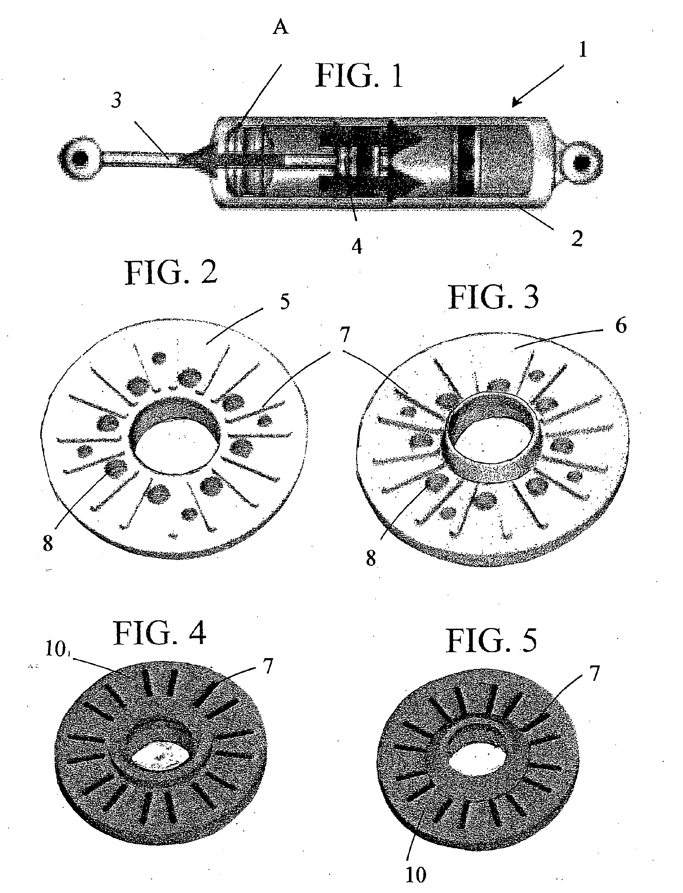

The seal is made up of at least one ring, preferably a pair of rings 5 and 6, made of plastic material and visible in Figures 2 and 3, joined together with co-moulded rubber. Said rings present, on their faces, radial ribbings 7 having a substantially rectangular cross section; these have the purpose of rendering the ring more resistant to the loads and consequently, according to the requirements of use, can vary in shape and size. Made in the wall of the ring or rings are also through holes 8 distributed over the surface thereof substantially along the perimeter of a square, the bisectrices of which pass through the centre of the ring. The diameter of the holes is not necessarily the same for all, but can vary as a function of the position in which they are set along the perimeter of the square. Said holes have the purpose of facilitating sliding of the rubber between one ring and another or else between one face and another of the ring in the case of a single ring, during the co-moulding step, and moreover render the seal more compact and improve tightness of the plastic and rubber components.

The plastic material used for the fabrication of each ring, in the case of use of a pair of rings, may be of different nature so as to be able to adapt the physical and mechanical characteristics of the seal to the requirements of its use. In addition, their particular final shape is studied so as to improve the mechanical resistance of the finished seal. Said seal is visible in the final form with its two faces in Figures 4 and 5, where there may be noted the rubber coating 10, resulting from the co-moulding process, surfacing from which are the strengthening ribbings 7. As may be noted, the two faces have different profiles to enable better adaptation to the requirements of tightness towards the inside and towards the outside of the cylinder 2 forming part of the shock absorber.

Of course the shape and size of the rings, of the ribbings, and of the through holes, as likewise the materials of construction, may be varied by adopting shapes and materials that are equivalent, without thereby departing from the sphere of protection defined by the claims of the present invention.

## Claims

1. A seal for the oil contained in the cylinder (2) of a shock absorber for motor vehicles, made up among other things of a stem (3) which is slidably inserted in said cylinder and the movement of which is controlled by control valves (4), said seal being disk-shaped, being mounted slidably on the stem (4) and being **characterized in that** it is made up of at least one ring (5) made of plastic material combined with rubber via co-moulding.

2. The seal according to Claim 1, **characterized in that** it is made up of a pair of rings (5, 6) made of plastic material combined with rubber via co-moulding.

3. The seal according to Claims 1 and 2, **characterized in that** each ring is provided with radial reinforcement ribbings (7).

4. The seal according to Claim 2, **characterized in that** each ring (5, 6) is made of plastics that present characteristics that differ from one another.

5. The seal according to Claim 1, **characterized in that** the wall of each ring is provided with through holes (8).

6. The seal according to Claim 1, **characterized in that** the two faces of said seal have different profiles so as to enable adaptation to different sealing means.
